# EUROPEAN PATENT SPECIFICATION

(11) **EP 1 482 621 B1**
(45) Date of publication and mention of the grant of the patent: **02.01.2008**
(21) Application number: 03743588.0
(22) Date of filing: 04.03.2003
(51) Int. Cl.: H02J 9/06, H02M 5/458

(54) **UNINTERRUPTIVE POWER SOURCE APPARATUS**
NICHTUNTERBRECHENDE STROMVERSORGUNGSVORRICHTUNG
APPAREIL A SOURCE D'ALIMENTATION SANS INTERRUPTION

(30) Priority: 06.03.2002 JP 2002060976; 09.08.2002 JP 2002233345
(43) Date of publication of application: 01.12.2004
(73) Proprietor: FUJI ELECTRIC CO., LTD., Kawasaki-shi, Kanagawa 210-0856 (JP)
(72) Inventor: Amano, Isao, Fuji Elektric Co., Ltd., Kawasaki-shi, Kanagawa 210-0856 (JP)
(74) Representative: Hoffmann, Eckart
(86) International application number: PCT/JP2003/002485
(87) International publication number: WO 2003/075431

(56) References cited:
- EP-A- 0 486 130
- JP-A- 9 331 684
- JP-A- 2000 172 351
- JP-A- 2001 286 078
- CHEN C ET AL: "SIMPLE TOPOLOGIES FOR SINGLE PHASE AC LINE CONDITIONING" IEEE TRANSACTIONS ON INDUSTRY APPLICATIONS, IEEE INC. NEW YORK, US, vol. 30, no. 2, 1 March 1994 (1994-03-01), pages 406-412, XP000457080 ISSN: 0093-9994

## Description

### FIELD OF THE INVENTION

The present invention relates to an uninterruptible power supply unit capable of continuously supplying electric power to a load by continuously supplying electric power to this load, using energy stored in an electric power storage means when power service interruption occurs.

### DESCRIPTION OF THE BACKGROUND ART

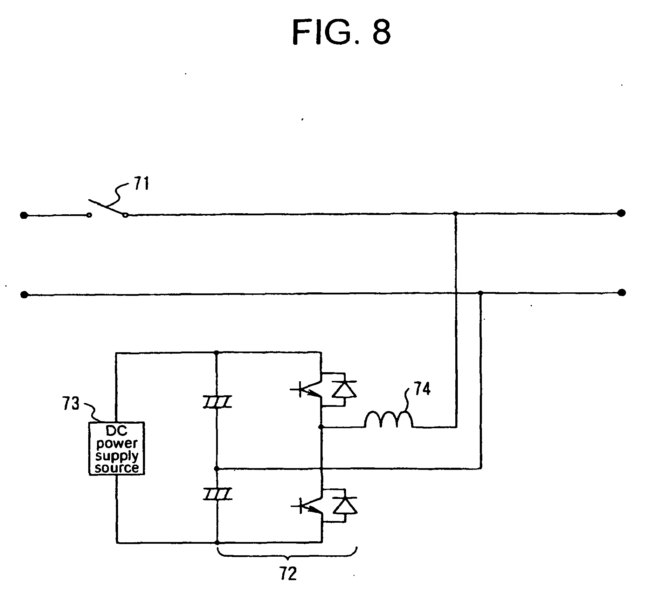

In terms of the uninterruptible power supply unit corresponding to the type cited above, there is a proposal for an uninterruptible power supply unit based on a so-called Standby Power Supply (SPS) system featuring satisfactory operating energy efficiency, for example. FIG. 8 presents one example, in which AC input from a commercially available power supply source is supplied to a load (not shown) via a relay switch 71. Further, a half-bridge-type converter 72 and a DC power supply source 73 are connected to the power supply line for supplying the AC input to the load in parallel to an AC power input terminal receiving AC power from a commercially available power supply source. Further, a reactor 74 is disposed between the power supply line and the converter 72. A pair of switching elements and a pair of capacitors respectively connected in series, for example, are individually connected in parallel to the converter 72. Further, each of the switching elements is linked with a diode so as to form an anti-parallel connection.

When the AC input is supplied normally, the relay switch 71 is controlled under an electrically conductive condition to enable AC input to be supplied to the load. On the other hand, when an abnormal condition arises in the AC input due to a power service interruption or the like, the relay switch 71 is configured to shut off to cause the commercial power supply line to be disconnected from the power supply line. Then, using the DC power supply source 73 as the source of energy, the converter 72 is activated to operate as an inverter to generate a specific amount of AC power before eventually being supplied to the load.

Due to the above arrangement, even in the event of a power service interruption, AC power can be continuously supplied to the load, as normally.

Nevertheless, in the case of operating the above-cited SPS-type uninterruptible power supply unit, in the event of a power service interruption, the SPS system instantaneously responds to detect this failure and simultaneously shut off the relay switch 71. However, a certain time lag ranging from a few milliseconds to more than 10 milliseconds inevitably occurs from the moment of the actual detection of the occurrence of power service interruption to the moment at which the relay switch 71 is actually shut off.

During this time, there may be a case in which the uninterruptible power supply unit itself or any of those apparatuses linked with the above SPS system may be adversely affected by over current flowing through any of the short-circuit portions.

To cope with this problem, a method has been conceived which, in the event of a power service interruption, provisionally halts the operation of the converter 72 to shut off the relay switch 71, and then reactivates the operation of the converter 72. Nevertheless, this method in turn generates the further problem of provisionally suspending a voltage output that should be transmitted to a load due to the provisional suspension of the operation of the converter 72 until the relay switch 71 is eventually shut off.

To prevent the voltage output from being provisionally suspended, it is necessary to continuously operate the converter 72. However, this in turn may cause the associated apparatuses to be adversely affected by the flow of over current.

Accordingly, it is desired that any effective device and method for simultaneously solving the above two problems should be provided.

An uninterruptible power supply unit as defined in the pre-characterizing portion s of claims 1 and 2 is known form EP 0 486 130 A2.

The object of the present invention is to provide an uninterruptible power supply unit that is capable of preventing related apparatuses from being adversely affected by the flow of over current at the time of disconnecting the AC-power input side due to the decline in the input voltage, and that is also capable of preventing an output voltage from being subject to provisional suspension.

### DISCLOSURE OF THE INVENTION

This object is achieved by an uninterruptible power supply unit claimed in claims 1 and 2. Preferred embodiments of the invention are defined in the dependent claims.

According to Claim 1, when no abnormality of an input voltage delivered by AC power is detected, the input AC power is output to a load as it is. Simultaneously, a second (series) converter connected in series to the power supply line makes an appropriate adjustment so that the AC output voltage at the output terminal can correspond to a predetermined value before being output to a load. When energy stored in the electric power storage means is varied by the voltage adjusting operation of the series converter, the first (parallel) converter connected in parallel to the power supply line activates to regulate energy stored in the storage means so as to achieve a predetermined value, thereby enabling the energy stored in the storage means to be held at a predetermined constant value.

On the other hand, when an abnormality is detected in the input voltage of AC power due to power service interruption or the like, the controlling means shuts off the power supply switch to enable the value of AC current flowing through the parallel converter to exactly match the value of AC output current at the output terminal thereof before the power supply switch has entered a shut-off condition. In other words, an operation is executed so that input current of AC power will become zero. Accordingly, the input side of the AC power becomes equal to the state being disconnected from the power supply line at a moment at which operation of the parallel converter is subject to control so as to make the input current zero before the power supply switch is actually shut off. Further, inasmuch as the series converter operates so that the AC output voltage can be made to achieve a predetermined value, even in the event of power service interruption, the power supply operation can be prevented from being provisionally suspended, thereby enabling an AC output voltage of a predetermined voltage value to be output constantly.

According to Claim 2 the controlling means shuts off said power supply switch and properly controls said parallel converter so that the value of the AC input current at said input terminal can becomes lower than a predetermined allowable value before the power supply switch (10) has entered a shut-off condition.

According to Claim 2 or 3, if no abnormality is detected in the input voltage supplied by AC power, input AC power is externally delivered. Simultaneously, so that the AC output voltage at the output terminal can achieve a predetermined value, the AC output voltage is properly adjusted by the series converter connected in series to the power supply line before eventually being output. As a result, a predetermined voltage value is output to a load that should receive power supplied from the uninterruptible power supply unit embodied by the present invention. When the amount of energy stored in the electric power storage means is varied by the voltage-adjusting operation executed by the series converter, the parallel converter connected in parallel to the power supply line activates to regulate the amount of energy stored in the electric power storage means so that it achieves a predetermined value, thereby enabling the energy stored in the storage means to be held at a predetermined value.

Conversely, whenever an abnormality is detected in the input voltage of the AC power, the controlling means shuts off the power supply switch to enable the value of the AC input current at the input terminal to fall below a predetermined allowable value, such as falling to zero. Accordingly, the input side of the AC power becomes equal to that in the state in which it is disconnected from the power supply line, at a moment at which the operation of the parallel converter is subject to control so as to make the input current zero before the power supply switch is actually shut off. Further, inasmuch as the series converter operates so that the AC output voltage can achieve a predetermined commanding value, even in the event of power service interruption and the like, the power supply operation can be prevented from being provisionally suspended, thereby securing continuous stable output of an AC output voltage having a predetermined commanding voltage value.

It should be noted that the above-mentioned allowable value may not necessarily be zero; however, any practical current value that does not adversely affect the uninterruptible power supply unit itself, or any of those apparatuses connected with any system analogous to the uninterruptible power supply unit, must also be introduced.

According to Claim 4, by using an inter-line voltage, i.e., the voltage between one of the input terminals and the end of power supply switch opposite to that connected to the other input terminal, as a detected voltage (also referred to as an opposite voltage hereinafter) of a voltage control loop in order to improve the performance precision for controlling the parallel converter, the above-referred controlling means properly controls the parallel converter. The uninterruptible power supply unit according to Claim 4 further comprises a second abnormality detection means for detecting abnormalities in the inter-line voltage. When an abnormality in the inter-line voltage has actually been detected by the second abnormality detection means, the uninterruptible power supply unit according to Claim 4 uses a preset rated voltage to serve as an opposite voltage.

Further, according to Claim 5, in terms of the above-mentioned preset rated voltage, the inter-line voltage can be adjusted to a specific value within a compensating voltage range provided for the above-mentioned series converter when an abnormality occurs in the inter-line voltage.

According to Claims 4-6, by using a inter-line voltage as an opposite voltage for improving the performance precision for controlling the parallel converter, the controlling means properly controls the operation of the parallel converter. In other words, the controlling means controls the parallel converter based on the opposite voltage and a controlling signal for exerting a controlling operation to convert the energy stored in the electric power storage means into a preset rated value. However, the magnitude of the controlling signal for exerting a controlling operation to convert the energy stored in the electric-power storage means into a preset rated value is less than the magnitude of the opposite voltage, thereby enabling the controlling means to execute a controlling operation so that the above-mentioned controlling signal can be converted into a predetermined opposite voltage.

In cases in which an abnormality occurs in the input voltage to cause the input side of the AC power to be opened, the voltage output from the parallel converter is detected as the inter-line voltage. In other words, inasmuch as the voltage output from the parallel converter is subject to control as a target value, the voltage output from the parallel converter is maintained at a substantially constant value.

Accordingly, in the event that the substantially constant value exceeds the range that can be compensated for by the series converter, it is no longer possible for the series converter to properly adjust the AC output voltage so as to achieve a predetermined value at its output terminal, thereby causing a decline in voltage. However, when an abnormality has occurred in the input voltage, since the output voltage from the parallel converter can be compensated to become a predetermined value as an opposite voltage via the series converter, i.e., using zero as an example, this method enables the series converter to compensate for the output voltage from the parallel converter to achieve a predetermined value, thus enabling the AC output voltage to remain stable at a predetermined value.

### BRIEF DESCRIPTION OF THE DRAWINGS

The essence of the present invention can be more fully clarified by referring to the following detailed description in conjunction with the accompanying drawings that follow.

In the accompanying drawings:
- FIG. 1: is an overall schematic block diagram showing an example of the uninterruptible power supply unit according to a first embodiment of the present invention;
- FIG. 2: is a simplified schematic block diagram showing the functional structure of the parallel converter controlling unit shown in FIG. 1;
- FIG. 3: is a simplified schematic block diagram showing the functional structure of the series converter controlling unit;
- FIG. 4: is an overall schematic block diagram showing an example of the uninterruptible power supply unit according to a second embodiment of the present invention;
- FIG. 5: is a simplified schematic block diagram showing the functional structure of the parallel converter controlling unit shown in FIG. 4;
- FIG. 6: is a simplified schematic block diagram showing the functional structure of the parallel converter controlling unit according to a third embodiment of the present invention;
- FIG. 7: is a simplified schematic block diagram showing the functional structure of the parallel converter controlling unit according to another embodiment of the present invention; and
- FIG. 8: is a simplified circuit diagram showing an example of a conventional uninterruptible power supply unit.

### OPTIMAL FORM FOR IMPLEMENTING THE INVENTION

Practical forms for implementing the present invention are described below. First, the first form for implementing the present invention is described below.

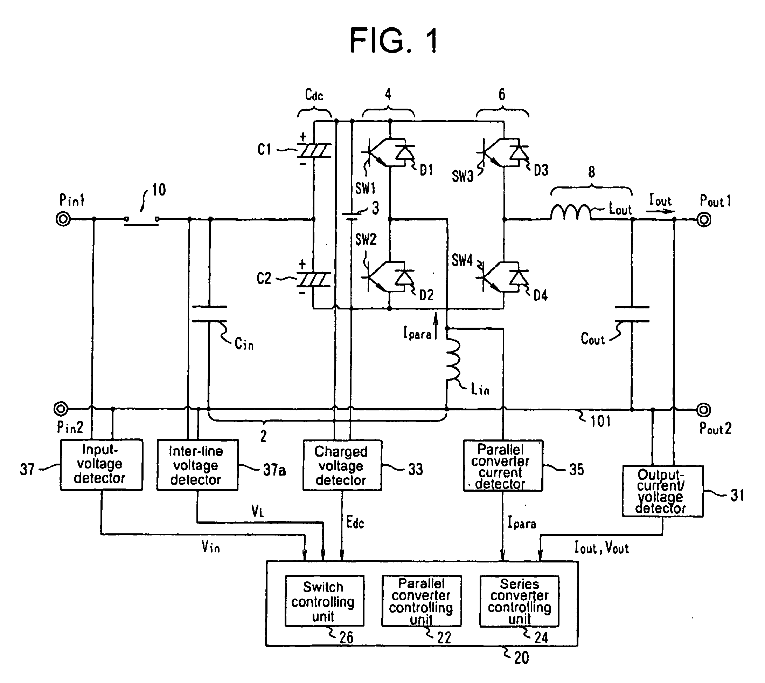

FIG. 1 is a schematic circuit diagram showing an example of the uninterruptible power supply unit according to the first embodiment of the present invention. As shown in FIG. 1, this uninterruptible power supply unit is so arranged that AC input from a commercially available power supply source is fed to a load (not shown) via a relay switch 10. The uninterruptible power supply unit according to the first embodiment essentially comprises the following: an electrolytic capacitor Cdc, a parallel converter 4 for charging and discharging a power voltage into and out of the electrolytic capacitor Cdc, and a series converter 6 for
adjusting the power voltage so that an output voltage Vout against the load can be converted into an output voltage target value Vout* by operating the electrolytic capacitor Cdc and a DC power supply source 3.

The above parallel converter 4 is constituted through the application of a half-bridge circuit in which a diode D1 and another diode D2 are individually connected to a switching element SW1 and another switching element SW2 (linked together in series) via an anti-parallel connection. Likewise, the above series converter 6 is also constituted by a half-bridge circuit in which a diode D3 and another diode D4 are individually connected to a switching element SW3 and another switching element SW4 (linked together in series) via an anti-parallel connection.

The DC power supply source 3, the parallel converter 4, and the series converter 6 are serially connected in parallel to both ends of the electrolytic capacitor Cdc comprising a capacitor C1 and another capacitor C2, which are connected together in series and are each provided with equivalent storage capacity value. An intermediate point and one-side input terminal Pin1 of the electrolytic capacitor Cdc are linked together via the relay switch 10. One end of the reactor Lin is connected to the connection point of the switching elements SW1 and SW2 of the parallel converter 4. The other end of the reactor Lin is connected to a power supply line 101 that interlinks the other input terminal Pin2 and an output terminal Pout2.

Further, a capacitor Cin is connected in parallel to the input terminals Pin1 and Pin2 at a junction point between the relay switch 10 and the electrolytic capacitor Cdc, and between the input terminal Pin2 and the reactor Lin of the power supply line 101. The capacitor Cin and the reactor Lin jointly constitute an LC filter 2.

The connection point of the switching elements SW3 and SW4 of the series converter 6 is connected to an output terminal Pout1 via a reactor Lout. A capacitor Cout is connected in parallel to the output terminals Pout1 and Pout2 at a junction point between the reactor Lout and the output terminal Pout1, and also at a junction point between the reactor Lin and the output terminal Pout2 of the power supply line 101. The capacitor Cout and the reactor Lout jointly constitute an LC filter 8.

It is so arranged that the parallel converter 4, the series converter 6, and the relay switch 10 are individually controlled by a controlling circuit 20.

The controlling circuit 20 comprises the following: a parallel converter controlling unit 22 for controlling the operation of the parallel converter 4, a series converter controlling unit 24 for controlling the operation of the series converter 6, and a switch controlling unit 26 for controlling the operation of the relay switch 10.

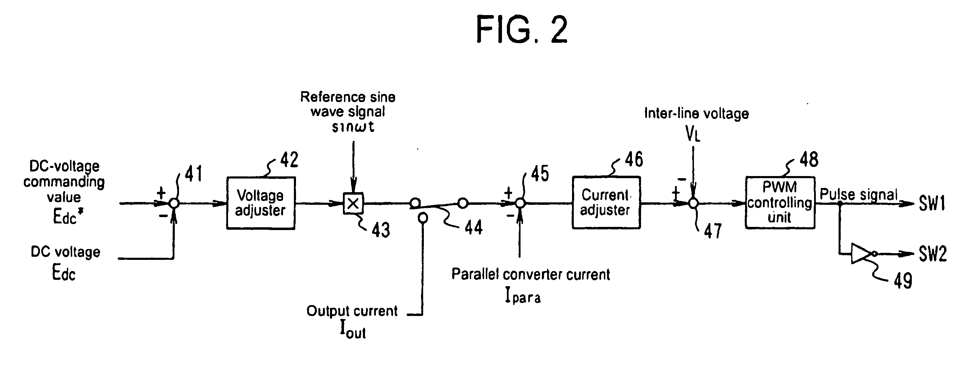

FIG. 2 exemplifies a simplified schematic block diagram showing the functional structure of the parallel converter controlling unit 22. As shown in FIG. 2, an arithmetic operator 41 detects the differential value between a DC-voltage commanding value Edc* for constituting a target value of a voltage at both ends of the electrolytic capacitor Cdc, and a DC-voltage Edc at both ends of the above electrolytic capacitor Cdc detected by a charged voltage detector 33. Further, a voltage adjuster 42 executes a voltage-adjusting arithmetic operation such as controlling Programmed Instructions (PI). The result of the arithmetic operation and the reference sine wave signal sinω t are multiplied by an arithmetic operator 43. It should be noted that the phase of the reference sine wave signal sinω t is synchronized with the inter-line voltage V_{L}, and the amplitude of this reference sine wave signal is optionally determined; for example, an optional amplitude is determined in correspondence with the rated voltage of an input voltage Vin supplied via a commercially available power supply source.

Either the result of the above multiplication executed by the arithmetic operator 43 or the value of output current lout is selected using a changeover switch 44, and then the selected data is output to another arithmetic operator 45. Next, the arithmetic operator 45 computes the differential value resulting from the subtraction of the current component Ipara (hereinafter referred to as the "parallel converter current") flowing through the parallel converter 4 detected by a parallel converter current detector 35 from either the result of the above multiplication executed by the arithmetic operator 43 or the output current lout selected using the changeover switch 44. The result of this subtraction, i.e., the differential value, is then output to a current adjuster 46. So that the current value corresponding to the differential value between the DC-voltage commanding value Edc* and the DC voltage Edc can coincide with the current value of the parallel converter current Ipara, or so that the current value of the parallel converter current Ipara can coincide with the actual value of the output current lout, the current adjuster 46 executes an arithmetic operation to properly adjust current values. The computed result is input to another arithmetic operator 47. The arithmetic operator 47 further receives the input of inter-line voltage V_{L} (detected by an inter-line voltage detector 37a) functioning as an opposite voltage to enhance the precision of the controlling operation of the parallel converter 4. The arithmetic operator 47 computes the differential value between the result of the arithmetic operation executed by the current adjuster 46 and the inter-line voltage V_{L}.

Next, based on the result of the arithmetic operation executed by the arithmetic operator 47, a PWM (Pulse Width Modulation) controlling unit 48 generates a pulse signal. In this case, the pulse signal is generated in order to activate the parallel converter 4 to perform a rectifying operation, and also so that the parallel converter current Ipara can achieve a specific current value corresponding to the differential value between the DC-voltage commanding value Edc* and the DC voltage Edc, or so that the parallel converter current Ipara can become the actual value of the output current lout. The pulse signal is thus output to control the operation of the switching element SW1 of the parallel converter 4. At the same time, a PWM signal is also output so that a signal logically inverted by a logical-inversion circuit 49 can properly control the operation of the switching element SW2.

When an input voltage Vin detected by an input-voltage detector 37 remains within a predetermined allowable range where the input voltage Vin is recognized to be normal, the changeover switch 44 transmits the result computed by the arithmetic operator 43 to another arithmetic operator 45. Conversely, when the input voltage Vin exceeds the allowable range, i.e., when the input voltage Vin is above or below the allowable range, the changeover switch 44 is operated to output the value of the output current lout detected by an output-current/voltage detector 31 to the arithmetic operator 45.

In other words, when the input voltage Vin is normal, the parallel converter controlling unit 22 activates operation of the parallel converter 4 to function as a PWM rectifier so as to control operation of the parallel converter 4 by way of feeding back the parallel converter current Ipara thereto so that the current flowing through the parallel converter 4, i.e., the parallel converter current Ipara, can become a specific value corresponding to the differential value between the DC-voltage commanding value Edc* and the DC voltage Edc. On the other hand, if an abnormality is detected in the input voltage Vin, the parallel converter controlling unit 22 properly controls operation of the parallel converter 4 so that the value of the parallel converter current Ipara can match the value of the output current lout.

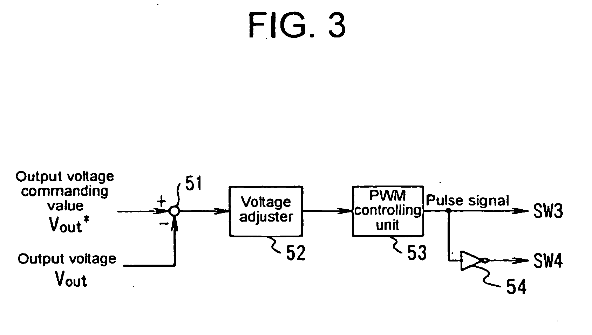

FIG. 3 presents a simplified block diagram showing the functional structure of the series converter controlling unit 24. As shown in FIG. 3, an arithmetic operator 51 detects the actual differential value between an output voltage Vout detected by the output-current/voltage detector 31 and a commanding value Vout* for a specific voltage to be output to a load. Then, based on the detected differential value, a voltage adjuster 52 executes an operation for controlling the programmed instructions (PI). Next, a pulse signal is generated by a PWM controlling unit 53, and is then converted into a control signal for controlling the operation of the switching element SW3 of the series converter 6. Simultaneously, the pulse signal logically inverted by a logical inversion circuit 54 is converted into a control signal for controlling the operation of switching element SW4, thereby controlling the switching elements SW3 and SW4 so as to implement a pulse-width modulating operation.

Based on the above arrangement, the series converter 6 is enabled to execute a process for controlling a data feedback operation so that the output voltage Vout can coincide with the output voltage commanding value Vout*.

When the input voltage Vin detected by an input-voltage detector 37 remains within a predetermined allowable range where the input voltage Vin is recognized to be normal, the above switch controlling unit 26 controls the relay switch 10 so as to be electrically conductive. Conversely, when the input voltage Vin exceeds the predetermined allowable range, the relay switch is kept in the shut-off state.

Next, functional operation of the uninterruptible power supply unit according to the first embodiment of the present invention is described below.

When an input voltage supplied via a commercially available power supply source is normal, an input voltage Vin detected by the input-voltage detector 37 remains within a predetermined allowable range, and thus the controlling circuit 20 determines that the input voltage Vin supplied via a commercially available power supply source is normal. Accordingly, the switch controlling unit 26 keeps the relay switch 10 in the electrically conductive condition. As a result of this arrangement, AC power supplied via a commercially available power supply source is fed to a load (not shown) via the relay switch 10, an LC filter 2, the series converter 6, and the LC filter 8, in that order.

Concurrently, by using the electrolytic capacitor Cdc and the DC power supply source 3 as an energy source, the series converter 6 properly compensates for the input voltage Vin so that the output voltage Vout can become the output voltage commanding value Vout*. The compensated input voltage Vin is then fed to the load via the LC filter 8. As a result, AC power containing a specific voltage value corresponding to the output voltage commanding value Vout* is fed to the load.

On the other hand, after causing the change-over switch 44 to select the arithmetic operator 43, the parallel converter controlling unit 22 delivers the data output from the arithmetic operator 43 to the arithmetic operator 45, thereby enabling the parallel converter 4 to perform a rectifying operation so as to enable a certain current corresponding to the differential value between the DC-voltage commanding value Edc* and the DC voltage Edc to flow through the parallel converter 4. As a result of the compensation for the output voltage Vout executed by the series converter 6 performed by using the electrolytic capacitor Cdc and the DC power supply source 3 as the energy source, the voltage at both ends of the electrolytic capacitor Cdc varies. In response, the parallel converter 4 operates so that the DC-voltage commanding value Edc* can constantly match the DC voltage Edc.

In other words, as a result of the compensation for the output voltage Vout executed by the series converter 6, even if the voltage at both ends of the electrolytic capacitor Cdc varies, by enabling the parallel converter 4 to charge and discharge a specific voltage into and out from the electrolytic capacitor Cdc, the voltage at both ends of the electrolytic capacitor Cdc can be maintained at the DC-voltage commanding-value Edc*.

If a short-circuit-related accident occurs on the input side of the AC power supply source, thereby causing the value of the input voltage Vin to exceed a predetermined allowable range, the input voltage Vin declines. In response, the controlling circuit 20 determines that an abnormal condition has occurred in the input voltage Vin, and the series converter controlling unit 24 continuously controls the operation of the series converter 6, thereby enabling the series converter 6 to operate so that the output voltage Vout can match the output voltage commanding value Vout*. Further, the switch controlling unit 26 executes a controlling operation to keep the relay switch 10 shut off.

On the other hand, now that a decline in the input voltage Vin has been detected, the parallel converter controlling unit 22 activates a change-over switch 44 to control the operation of the parallel converter 4 by using the value of the output current lout detected by the output-current/voltage detector 31 as the value for commanding the current flowing through the parallel converter 4.

Upon detection of an abnormality in the input voltage Vin, the relay switch 10 is kept in the shut-off condition. In such cases, there is a certain time lag from the moment at which the relay switch 10 is actually shut off to the moment at which the input side of the AC power supply source is actually disconnected. In this case, inasmuch as the parallel converter controlling unit 22 properly controls the operation of the parallel converter 4 so that the current flowing through the parallel converter 4 can constantly match the value of the output current lout at the moment at which the occurrence of an abnormality in the input voltage Vin has actually been detected. This, in turn, means that operation of the parallel converter 4 is securely controlled so that the input current value can become zero. In other words, the result of the above process corresponds to the state in which the input side of the AC power supply source has been cut off at the moment at which the occurrence of an abnormality in the input voltage Vin has actually been detected, before the relay switch 10 has entered a shut off condition.

Accordingly, inasmuch as the uninterruptible power supply unit has entered into a state corresponding to the state in which the input side of the AC power supply source has been instantaneously disconnected at the moment at which the occurrence of an abnormality in the input voltage Vin is actually detected, it is possible to prevent adverse effects upon the uninterruptible power supply unit itself or any of those apparatuses linked with any system identical to that of the uninterruptible power supply unit by the flow of over current via a short-circuit portion, thereby enabling improved reliability of the uninterruptible power supply unit.

Likewise, inasmuch as the series converter 6 operates so that the output voltage Vout can become the output voltage commanding value Vout*, it is possible to prevent the output voltage Vout ready for delivery to the load from being provisionally suspended, thereby enabling continuous output of AC power having voltage value exactly corresponding to the output voltage commanding value Vout*.

Next, a practical form for implementing the second embodiment of the present invention is described below.

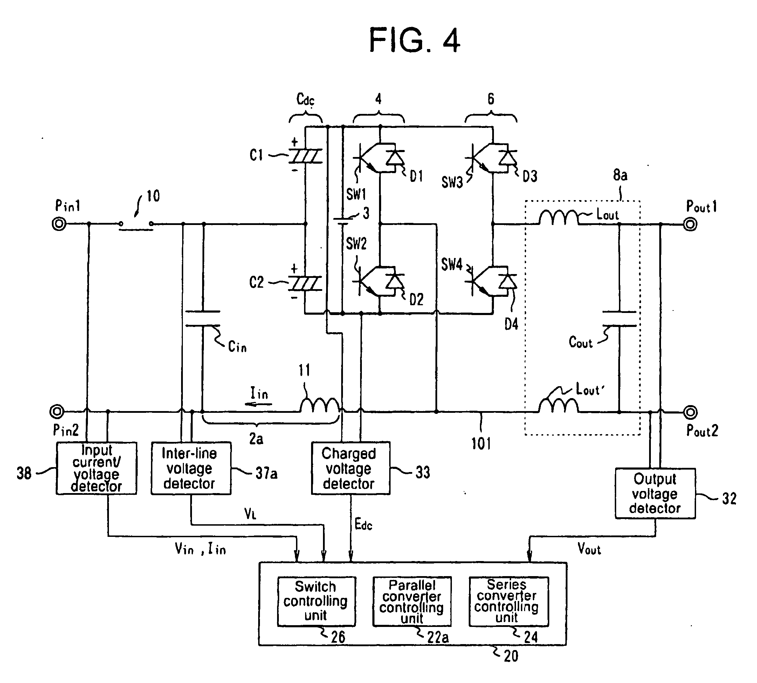

FIG. 4 presents an overall schematic block diagram showing an example of the uninterruptible power supply unit according to the second embodiment of the present invention. In the second embodiment, in place of the reactor Lin used for implementing the first embodiment, an input reactor 11 is disposed along an intermediate portion connected to a capacitor Cin on the power supply line 101 and along a line interconnecting a pair of switching elements SW1 and SW2 on the power supply line 101, where the capacitor Cin and the input reactor 11 jointly constitute an LC filter 2a. Further, a reactor Lout' is disposed along an intermediate portion connected to a capacitor Cout formed on the power-source supply line 101 and along an intermediate portion connected to the switching elements SW1 and SW2 on the power-source supply line 101. The reactors Lout and Lout' and the capacitor Cout jointly constitute a filtering circuit 8a.

The operations of the relay switch 10 and the series converter 6 are controlled by the switch controlling unit 26 and the series converter controlling unit 24, respectively, as in the first embodiment of the present invention. Likewise, operation of the parallel converter 4 is controlled by the parallel converter controlling unit 22a. Note that the components used for the second embodiment shown in FIG. 4 are designated by the same corresponding reference numerals and symbols used for the first embodiment, thereby obviating further description.

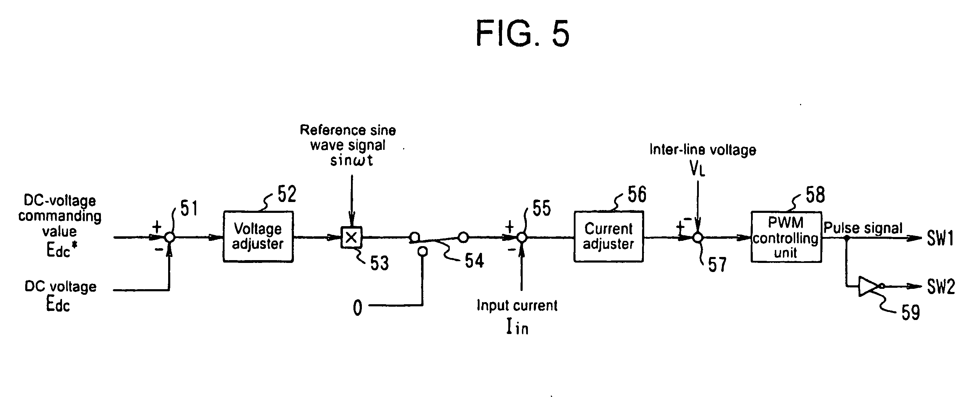

The parallel converter controlling unit 22a used for implementing the second embodiment of the present invention is constituted as per a simplified block diagram shown in FIG. 5.

As shown in FIG. 5, an arithmetic operator 51 detects the differential value between the DC voltage Edc consisting of the voltage at both ends of the electrolytic capacitor Cdc detected by the charged voltage detector 33 and the DC-voltage commanding value Edc*. Next, the voltage adjuster 52 executes an arithmetic operation for properly adjusting voltages, including, for example, a process for controlling programmed instructions (PI). The computed result is then multiplied by the reference sine wave signal sinω t by an arithmetic operator 53. Note that the phase of the reference sine wave signal sinω t is synchronized with the inter-line voltage V_{L}, and the amplitude of this reference sine wave signal sinω t is optionally determined, such as in correspondence with the rated voltage of the input voltage using a commercially available power supply source.

Next, the result of multiplication executed by the arithmetic operator 53 or a commanding value of "0" is selectively output to another arithmetic operator 55 via a change-over switch 54. Then, the arithmetic operator 55 computes the differential value between the result obtained by the arithmetic operator 53 or the commanding value "0" and input current lin flowing through an input reactor 11 detected by an input current/voltage detector 38. Next, a current adjuster 56 executes an arithmetic operation for properly adjusting the current so that the differential value will become zero. Next, another arithmetic operator 57 computes the differential value between the result computed by the current adjuster 56 and the inter-line voltage V_{L} detected by an inter-line voltage detector 37a.

Next, based on the computed result, a PWM controlling unit 58 generates a pulse signal for controlling the operation of the parallel converter 4. Simultaneously, the parallel converter 4 is activated to perform a rectifying operation, thereby enabling the PWM controlling unit 58 to generate a pulse signal so that the input current lin can match a specific current value corresponding to the differential value between the DC-voltage commanding value Edc* and the DC voltage Edc, or so that the input current lin will become zero. Next, the pulse signal is output as a functional signal for controlling operation of the switching element SW1 of the parallel converter 4. Simultaneously, another signal originating from a pulse signal logically inverted by a logical inversion circuit 59 is output to control the operation of the switching element SW2 of the parallel converter 4.

When the input voltage Vin detected by the input current/voltage detector 38 remains within a predetermined allowable range where the input voltage Vin is recognized to be normal, the change-over switch 54 outputs the result computed by the arithmetic operator 53 to the arithmetic operator 55. Conversely, when the input voltage Vin exceeds the predetermined allowable range, the changeover switch 54 outputs the commanding value "0" to the arithmetic operator 55.

More specifically, while the input voltage Vin remains normal, the parallel converter controlling unit 22a properly controls operation of the parallel converter 4 so that the input current lin can match a current value corresponding to the differential value between the DC-voltage commanding value Edc* and the DC voltage Edc. Conversely, when the input voltage Vin is abnormal, the parallel converter controlling unit 22a controls operation of the parallel converter 4 so that the input current lin becomes zero. It should be noted that the input current lin should not always become zero. In other words, instead of the value "0," a quite negligible current value relative to the rated current applied to the uninterruptible power supply unit shown in FIG. 4 may also be introduced, provided that the uninterruptible power supply unit and any of those apparatuses linked with any system identical to that of this uninterruptible power supply unit are not adversely affected by the flowing current due to the occurrence of power service interruption on the input side of the AC power supply source. Nevertheless, to ensure high reliability of the uninterruptible power supply unit, the input current lin should preferably become "0."
Next, the functional operation of the uninterruptible power supply unit according to the second embodiment of the present invention is described below.

While the input voltage supplied from a commercially available power supply line remains normal, the input voltage Vin detected by the input current/voltage detector 38 remains within a predetermined allowable range, and the controlling circuit 20 determines that the input voltage Vin is normal. Accordingly, the switch controlling unit 26 controls the relay switch 10 so as to be electrically conductive, thereby enabling delivery of input power from a commercially available power supply source to a load (not shown) via an LC filter 2a, the relay switch 10, the series converter 6, and a filtering circuit 8a, in that order. Concurrently, by using the electrolytic capacitor Cdc and the DC power supply source 3 as the energy source, the series converter 6 properly compensates for the input voltage fed from the commercial power supply source so that the output voltage Vout can achieve the predetermined output voltage commanding value Vout*; then, the compensated output voltage is fed to the load via the filtering circuit 8a. Accordingly, regardless of the actual voltage value of the AC input, it is so arranged that a proper amount of AC power having a voltage value exactly matching the output voltage commanding value Vout* can be supplied to the load.

On the other hand, the parallel converter controlling unit 22a operates the change-over switch 54 to select the arithmetic operator 53. The voltage data output from the arithmetic operator 53 is then transmitted to the arithmetic operator 55. In response, the parallel converter 4 executes a rectifying operation by using a certain current corresponding to the differential value between the DC-voltage commanding value Edc* and the DC voltage Edc as the value for commanding the input current lin. As a result of the compensating operation executed for the output voltage Vout by the series converter 6 by using the electrolytic capacitor Cdc and the DC power supply source 3 as the energy source, the voltage at both ends of the electrolytic capacitor Cdc varies. In response, the parallel converter 4 operates by using a specific current value corresponding to the differential value between the DC-voltage commanding value Edc* and the DC voltage Edc as the practical value for commanding the input current lin.

Accordingly, even when the voltage at both ends of the electrolytic capacitor Cdc is varied by the operation for compensating for the output voltage Vout executed by the series converter 6, inasmuch as the parallel converter 4 continuously charges and discharges a specific power voltage into and out from the electrolytic capacitor Cdc, the voltage at both ends of the electrolytic capacitor Cdc can be stably maintained at a predetermined DC-voltage commanding-value Edc*.

In the event of a short-circuit-related accident on the input side of the AC power supply source that causes the magnitude of the input voltage Vin to exceed a predetermined allowable range, the input voltage Vin itself begins to decline. In response, the controlling circuit 20 determines that an abnormality is present in the input voltage Vin and enables the series converter controlling unit 24 to continue to properly control the operation of the series converter 6. Accordingly, the series converter 6 is allowed to operate so that the output voltage Vout can exactly match the output voltage commanding value Vout*.

On the other hand, now that an actual decline in the input voltage Vin has been detected, the parallel converter controlling unit 22a enables the change-over switch 54 to properly control the operation of the parallel converter 4 by designating the commanding value "0" for commanding the input current lin.

Upon detection of an abnormality in the input voltage Vin, the relay switch 10 is controlled so as to enter the fully shut off condition. In this condition, a certain period of time is required from the moment at which the relay switch 10 is brought into the closed condition to the moment at which the input side of the AC power supply source is fully disconnected from the relay switch 10. In such cases, however, at the moment at which the occurrence of an abnormality in the input voltage Vin has been detected, the parallel converter controlling unit 22 properly controls the operation of the parallel converter 4 so that the input current lin becomes zero. As a result, this condition corresponds to the state in which the input side of the AC power supply source has been disconnected from the relay switch 10 at the moment at which the occurrence of an abnormality in the input voltage Vin has been detected before the input side of the AC power supply source is actually disconnected from the relay switch 10.

Accordingly, even in the event of a short-circuit-related accident, for example, it is possible to prevent adverse effects on the uninterruptible power supply unit itself or any of those apparatuses linked with any system identical to that of the uninterruptible power supply unit by excessive current flowing via any of the short-circuit portions, thereby enabling improved reliability of the uninterruptible power supply unit.

While the uninterruptible power supply unit is operated, the series converter 6 operates by using the electrolytic capacitor Cdc and the DC power supply source 3 as the energy source so that the output voltage Vout can attain the output voltage commanding value Vout*. Thus, a specific AC voltage exactly matching the output voltage commanding value Vout* is continuously output to a load, thereby preventing the output voltage Vout that should be delivered to the load from being provisionally suspended.

Although the above description specifically refers to the first and second forms for implementing the present invention by referring to a case in which the parallel converter 4 and the series converter 6 are respectively constituted by means of a half-bridge circuit comprising multiple switching elements and multiple diodes connected together in the form of an anti-parallel connection, it should be understood that the practical scope of the present invention is by no means confined to the above-described constitution; rather, the parallel converter 4 and the series converter 6 may be constituted through the application of a full-bridge circuit as well.

In the above first and second forms for implementing the present invention, it is so arranged that the relay switch 10 corresponds to a power supply switch; the parallel converter 4 corresponds to a parallel converter; the electrolytic capacitor Cdc and the DC power supply source 3 individually correspond to the electricity storage means; the series converter 6 and the series converter controlling unit 24 individually correspond to a series converter; the input-voltage detector 37 or the input current/voltage detector 38 individually corresponds to the voltage abnormality detection means; the switch controlling unit 26 and the parallel converter controlling unit 22 or 22a individually correspond to the controlling means; and the input reactor 11 corresponds to an input reactor.

Next, the third practical form for implementing the present invention is described below.

Except for the difference in the constitution of the parallel converter controlling unit 22 applied to the first form for implementing the present invention, the constitutions of all components of the uninterruptible power supply unit according to the first and third embodiments are identical, and thus identical components are designated by identical reference numerals. Further descriptions related thereto are omitted.

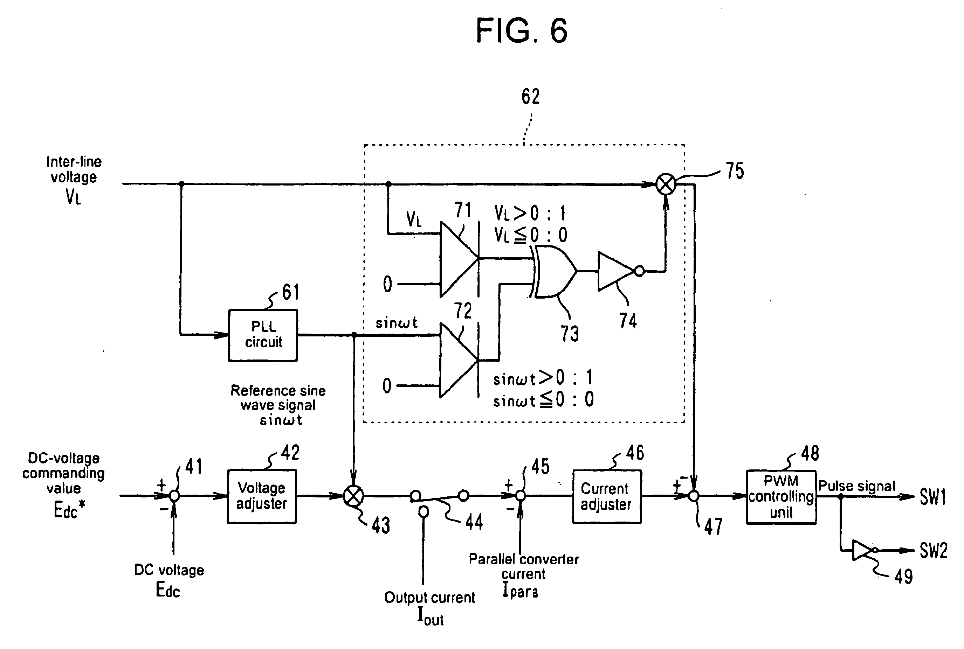

As shown in FIG. 6, in contrast with the parallel converter controlling unit 22 applied to the first embodiment shown in FIG. 2, the parallel converter controlling unit 22 introduced in the third embodiment is further equipped with a PLL (Phase-Locked Loop) circuit 61 and a limiter circuit 62.

The PLL circuit 61 inputs an inter-line voltage V_{L} detected by an inter-line voltage detector 37a, then generates a reference sine wave signal sinω t having its specific phase synchronized with that of the inter-line voltage V_{L}. The generated reference sine wave signal sinω t is then transmitted to an arithmetic operator 43.

As shown in FIG. 6, the limiter circuit 62 comprises the following: a comparator 71 that compares the inter-line voltage V_{L} to the reference value "0" [V]; another comparator 72 that compares the reference sine wave signal sinω t input from the PLL circuit 61 to the reference value "0"; an EOR circuit 73 that inputs the compared data from the comparators 71 and 72, and then outputs an exclusive OR; a NOT circuit 74 that inverts data output from the EOR circuit 73; and an arithmetic operator 75 that executes multiplication of an input voltage Vin and the inverted data output from the NOT circuit 74. The multiplied data output from the arithmetic operator 75 is then transmitted to another arithmetic operator 47.

The comparator 71 compares the inter-line voltage V_{L} to the reference value "0" [V], and if the value of the inter-line voltage V_{L} is greater than the reference value "0," the comparator 71 outputs a logical value "1," whereas if the value of the inter-line voltage V_{L} is less than the reference value "0," the comparator 71 outputs a logical value "0." On the other hand, the other comparator 72 compares the reference sine wave signal sinω t to the reference value "0," and if the value of the reference sine wave signal sinω t is greater than that of the reference value "0," the comparator 72 outputs a logical value "1," whereas if the value of the reference sine wave signal sinω t is less than the reference value "0," the comparator 72 outputs a logical value "0."

Concretely, when the coded signal of the inter-line voltage V_{L} coincides with the coded signal of the reference sine wave signal sinω t, the NOT circuit 74 outputs a logical value "1," whereas if the codes do not coincide, the NOT circuit 74 outputs a logical value "0." Inasmuch as either of these is multiplied by the inter-line voltage V_{L}, when the coded signal of the inter-line voltage V_{L} coincides with that of the reference sine wave signal sinω t, the inter-line voltage V_{L} is transmitted to the arithmetic operator 47. If these coded signals do not coincide, "0" is transmitted to the arithmetic operator 47.

The arithmetic operator 47 converts the multiplied voltage data output from the arithmetic operator 75 into opposite voltage data for varying the controlling characteristics of the parallel converter controlling unit 22 in relation to the parallel converter 4. The arithmetic operator 47 computes the differential value between the opposite voltage and a voltage-adjusted value output from a current adjuster 46, and then outputs the computed differential value to a PWM controlling unit 48. Then, based on the computed differential value, the PWM controlling unit 48 generates a pulse signal for delivery to the parallel converter 4.

Accordingly, in the third embodiment of the present invention, when the input voltage Vin fed by a commercially available power supply source remains normal and the relay switch 10 is controlled so as to be electrically conductive, the input voltage Vin is detected as the inter-line voltage V_{L}. The coded signal of the detected inter-line voltage V_{L} exactly matches that of the reference sine wave signal sinω t output from the PLL circuit 61. Accordingly, as in the case of the first form for implementing the present invention, the inter-line voltage V_{L} is transmitted to the arithmetic operator 47 as the opposite voltage.

On the other hand, when a short-circuit-related accident has actually occurred on the input side of the AC power supply source, thereby causing the magnitude of the input voltage Vin to exceed a predetermined allowable range, the input voltage Vin itself declines. In response, the controlling circuit 20 determines that an abnormality has been generated in the input voltage Vin and enables the change-over switch 44 to properly control operation of the parallel converter 4 by using the value of the output current lout detected by the output-current/voltage detector 31 as the value for commanding the current flowing through the parallel converter 4. Simultaneously, the controlling circuit 20 controls the relay switch 10 to keep it in the fully shut off condition.

This, in turn, leads to a condition corresponding to the state in which the input side of the AC power supply source has been cut off at the moment at which the occurrence of an abnormality in the input voltage Vin has been detected before the relay switch 10 is fully shut off.

While the input voltage Vin remains normal, the parallel converter controlling unit 22 executes an operation for controlling the sum of the differential value between the DC-voltage commanding value Edc* and the DC voltage Edc, a voltage value output from the current adjuster 46 corresponding to the difference from the parallel converter current Ipara, and the inter-line voltage V_{L} (i.e., the input voltage Vin as the opposite voltage), as the commanding value of the PWM controlling unit 48. Under this condition, inasmuch as the adjustable voltage for controlling the current corresponding to the voltage output from the current adjuster 46 is negligible, the voltage actually being output from the parallel converter 4 is substantially equal to the opposite voltage; that is, substantially equal to the inter-line voltage V_{L}.

When the input side of the AC power supply source has been cut off from the relay switch 10 under the above condition, the actual voltage output from the parallel converter 4 is detected as the inter-line voltage V_{L}, which is then transmitted to the arithmetic operator 47 as an opposite voltage. Accordingly, the parallel converter controlling unit 22 detects the actual voltage output from the parallel converter 4 and controls the parallel converter 4 so as to have it also output a voltage equivalent to the detected voltage. This in turn enables the parallel converter 4 to stably output a substantially constant voltage.

In such cases, the series converter 6 operates to enable the output voltage Vout to coincide with the output voltage commanding value Vout*. However, in the state in which the input side of the AC power supply source has been disconnected from the relay switch 10, the voltage output from the parallel converter 4 is detected as the output voltage Vout, and thus the series converter 6 executes a compensating operation so that the output voltage Vout held at a substantially constant voltage can become the AC output voltage commanding value Vout*. Accordingly, in cases in which the output voltage Vout (i.e., the voltage output from the parallel converter 4 held at a substantially constant level) remains within a predetermined range capable of compensating for the voltage output from the series converter 6, the series converter 6 is enabled to properly compensate for this value to become the output voltage commanding value Vout*. Conversely, when the voltage output from the parallel converter 4 exceeds a predetermined range capable of compensating for the voltage output from the series converter 6, it is no longer possible to satisfy the output voltage commanding value Vout*, thereby causing the output voltage to decline. More specifically, assuming that the practical scope of compensation for the voltage output from the series converter 6 ranges from 0 to ±100%, in the event that the voltage output from the parallel converter 4 is held at a positive (+) value, such as X [V], for example, it is not practicable to fully compensate for the output voltage toward the negative (-) side, thereby causing the output voltage Vout to decline.

On the other hand, the limiter circuit 62 comparatively checks whether the detected inter-line voltage V_{L} is designated by a specific code signal identical to that of the reference sine wave signal sinω t synchronized with the inter-line voltage V_{L}. As described above, when the input side of the AC power supply source has been disconnected from the relay switch 10, thereby causing the voltage output from the parallel converter 4 to remain substantially constant, this output voltage is then detected as the inter-line voltage V_{L}, thereby keeping the code signals of the reference sine wave signal sinω t and the inter-line voltage V_{L} from coinciding. Under such conditions, voltage 0 is transmitted to the arithmetic operator 47 as the opposite voltage.

Accordingly, using a voltage-adjusted component applicable to the current-controlling operation output from the current adjuster 46 as the commanding value allows the parallel converter controlling unit 22 to properly control the operation of the parallel converter 4. However, inasmuch as the amount of the voltage-adjusted component usable for the current-controlling operation is negligible, the actual voltage output from the parallel converter 4 becomes substantially zero, thereby enabling the series converter 6 to operate to output the output voltage commanding value Vout*.

Accordingly, when the practical range for compensating for the voltage output from the series converter 6 is set from 0 to ±100%, inasmuch as the voltage output from the parallel converter 4 remains within a range in which compensation is possible, this output voltage can be fully compensated for by the series converter 6, thus making it possible to properly compensate for the voltage to be fed to a load to become the output voltage commanding value Vout*.

The above arrangement makes it possible to prevent the output voltage Vout from declining. Accordingly, even in the event of an abnormal condition on the input side of the AC power supply source, the uninterruptible power supply unit according to the present invention can securely supply the voltage.

The above description of the third embodiment of the present invention refers solely to the provision of the PLL circuit 61 and the limiter circuit 62 added to the parallel converter controlling unit 22 applied to the first embodiment thereof. However, it is also allowable to introduce the PLL circuit 61 and the limiter circuit 62 to the above-described second embodiment of the present invention.

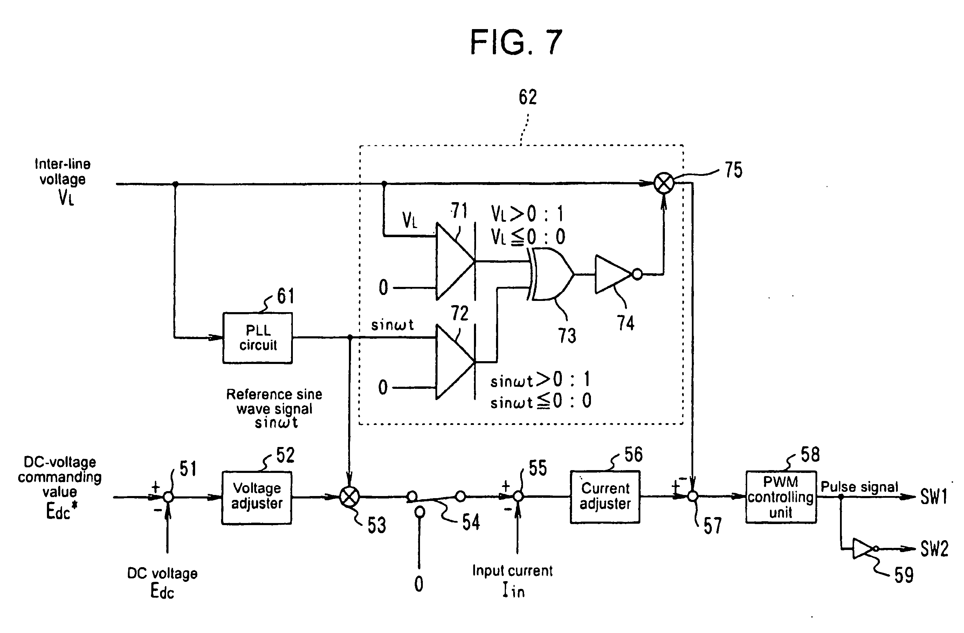

In this case, as shown in FIG. 7, the PLL circuit 61 and the limiter circuit 62 are added to the parallel converter controlling unit 22a already introduced in the second embodiment shown in FIG. 5. When the code signals designating the inter-line voltage V_{L} and the reference sine wave signal sinω t coincide, the inter-line voltage V_{L} is then output to an arithmetic operator 57 as an opposite voltage. Conversely, if the code signal designating the inter-line voltage V_{L} does not coincide with that of the reference sine wave signal sinω t, voltage 0 is output to the arithmetic operator 57 as an opposite voltage.

Accordingly, as in the preceding embodiments, when the input side of the AC power supply source has been disconnected from the relay switch 10, the voltage output from the parallel converter 4 is detected as the inter-line voltage V_{L}, which is then transmitted to the arithmetic operator 47 as an opposite voltage, thereby enabling the parallel converter 4 to continuously output a substantially constant voltage. When the substantially constant voltage has been detected as the inter-line voltage V_{L}, and when code signals designating the reference sine wave signal sinω t and the inter-line voltage V_{L} no longer coincide, voltage 0 is transmitted to the arithmetic operator 47 as the opposite voltage.

As a result, the voltage output from the parallel converter 4 becomes substantially zero. Inasmuch as the series converter 6 is capable of fully correcting the voltage output from the parallel converter 4 to allow conversion of this output voltage into the output voltage commanding value Vout*, the output voltage Vout for transmission to a load can be securely held at the output voltage commanding value Vout*. Accordingly, even in the event of an abnormal condition on the input side of the AC power supply source, the uninterruptible power supply unit embodied by the present invention can stably supply the required power to the load without causing provisional suspension of the power supply.

Note that the above description of the third embodiment of the present invention refers solely to a case in which if any abnormality is generated on the input side of the AC power supply source, voltage 0 is transmitted to the arithmetic operator 47 as an opposite voltage. However, the scope of the third embodiment is not limited solely to the above description; the applicable voltage may also be determined in correspondence with the practical compensating range on the part of the series converter 6. Essentially, it is suggested that when the input side of the AC power supply source has actually been disconnected from the relay switch 10, an appropriate opposite voltage be provided to enable the voltage output from the parallel converter 4 to attain a specific value capable of securely holding an output voltage Vout for delivery to a load at the predetermined output voltage commanding value Vout* via functional operation of the series converter 6.

Note further that the above description of the third embodiment of the present invention also refers to a case in which the limiter circuit 62 is made to switch an opposite voltage for delivery to arithmetic operator 47. However, the scope of the third embodiment is not solely limited to this effect. Specifically, when the opposite voltage is abnormal, that is, when the voltage output from the parallel converter 4 has been varied by the varied opposite voltage and is thereby no longer practicable for properly holding the output voltage Vout exactly at the predetermined output voltage commanding value Vout* via operation of the series converter 6, it is allowable to apply any effective means capable of instantaneously detecting the above failure and instantaneously switching the corresponding voltage value to the zero voltage (0 V).

### INDUSTRIAL APPLICABILITY

As described above, according to the uninterruptible power supply unit corresponding to Claims 1-3 related to the present invention, when the AC input voltage is abnormal, the uninterruptible power supply unit is so arranged as to activate operation of the parallel converter in order that the value of the current actually flowing through this parallel converter can attain a specific AC output-current value, properly control operation of this parallel converter so that the value of the AC input current can become zero, or activate operation of the parallel converter so that the value of the AC input current value will become less than a predetermined allowable value such as zero, for example, thereby making it possible to generate a specific state exactly corresponding to the state in which the input side of the AC power supply source has been disconnected. As a result, in cases in which the power supply switch has been shut off subsequent to the detection of an abnormality present in the AC input and the parallel converter has been controlled so that the value of the AC input current will become zero, it is possible to put the input side of the AC power supply source into the state corresponding to a case in which the input side of the AC power supply source has been disconnected from the power supply line at the moment at which the parallel converter begins a controlling operation to decrease the value of the AC input current to zero volts before the power supply switch is shut off. The above arrangement makes it possible to prevent adverse effects on the uninterruptible power supply unit Itself or any of those apparatuses linked with any system analogous to the uninterruptible power supply unit by the flow of overcurrent via any short-circuit portion, thereby enhancing reliability.

Further, while the above processes are underway, inasmuch as the series converter operates to enable the AC output voltage to become the AC-voltage commanding value, the uninterruptible power supply unit embodied by the present invention is enabled to continuously output an AC current comprising a predetermined voltage value, thereby reliably preventing the uninterruptible power supply unit from provisionally suspending the power supply operation.

According to the uninterruptible power supply unit corresponding to Claims 4-6 related to the present invention, operation of the parallel converter is subject to control by means of an opposite voltage comprising the inter-line voltage. When an abnormality is generated in the inter-line voltage, a specific rated voltage is used as the opposite voltage in place of the inter-line voltage. Inasmuch as the specific rated voltage has been determined to be of a specific value that can be corrected by the series converter so that the voltage output from the parallel converter (i.e., the AC output voltage at an output terminal) can attain a predetermined value, such as zero, while the power supply switch remains shut off. This enables the uninterruptible power supply unit of the present invention to continuously output an AC current comprising a predetermined voltage value, thereby making it possible to reliably prevent the uninterruptible power supply unit from provisionally suspending its operation.

## Claims

1. An uninterruptible power supply unit comprising:
a first and a second input terminal (Pin1, Pin2) for receiving an AC-power input voltage (Vin);
a first and a second output terminal (Pout1, Pout2) for outputting an AC output voltage;
a power supply switch (10) that is interposed in a power supply line between said first input terminal (Pin1) and a circuit node;
a first converter (4) that is connected between said circuit node and said second input terminal (Pin2);
an electrical-power storage means (3) connected to said first converter (4);
a second converter (6) that is connected between said circuit node and said first output terminal and is controlled to adjust the AC output voltage at said output terminals (Pout1, Pout2) by using said electrical-power storage means (3) as an energy source so that said AC output voltage, attains a predetermined value;
a first voltage abnormality detection means adapted to detect abnormalities in the AC-power input voltage input into said input terminals; and
a controlling means (20) adapted to control said power supply switch (10) in response to the result detected by said first voltage abnormality detection means;
wherein said controlling means (20) has a switch controlling unit (26) adapted to control said power supply switch (10) so as to be electrically conductive while no abnormality is detected by said first voltage abnormality detection means, and to shut-off when an abnormality has been detected:
**characterized in that** said controlling means (20) has a first-converter controlling unit (22) adapted to control said first converter (4) so that the energy stored in said electrical-power storage means (3) attains a predetermined rated value while no abnormality is detected by said first voltage abnormality detection means and, when an abnormality has been detected, to control said first converter (4), simultaneously with said power supply switch (10) being controlled to shut-off, so that the value of the current flowing through said first converter (4) coincides with the value of the AC output current through said output terminals (Pout1, Pout2) before the power supply switch (10) has entered a shut-off condition.

2. An uninterruptible power supply unit comprising:
a first and a second input terminal (Pin1, Pin2) for receiving an AC-power input voltage (Vin);
a first and a second output terminal (Pout1, Pout2) for outputting an AC output voltage;
a power supply switch (10) that is interposed in a power supply line between said first input terminal (Pin1) and a circuit node;
a first converter (4) that is connected between said circuit node and said second input terminal (Pin2);
an electrical-power storage means (3) connected to said first converter (4);
an input reactor (11) that is disposed between said input terminal of said power supply line and said first converter (4);
a second converter (6) that is connected between said circuit node and said first output terminal and is controlled to adjust the AC output voltage at said output terminals (Pout1, Pout2) by using said electrical-power storage means (3) as an energy source so that said AC output voltage attains a predetermined value;
a first voltage abnormality detection means adapted to detect abnormalities in the AC-power input voltage input into said input terminal; and
a controlling means (20) adapted to control said power supply switch (10) in response to the result detected by said first voltage abnormality detection means;
wherein said controlling means (20) has a switch controlling unit (26) adapted to control said power supply switch(10) so as to be electrically conductive while no abnormality is detected by said first voltage abnormality detection means, and to shut-off when an abnormality has been detected;
**characterized in that** said controlling means (20) has a first-converter controlling unit (22) adapted to control said first converter (4) so that the energy stored in said electrical-power storage means (3) attains a predetermined rated voltage while no abnormality is detected by said first voltage abnormality detection means and , when an abnormality has been detected, to control said first converter (4) simultaneously with said power supply switch (10) being controlled to shut-off so that the value of the AC input current at said input terminal falls below a predetermined allowable value before the power supply-switch (10) has entered a shut-off condition.

3. An uninterruptible power supply unit according to Claim 2, wherein, when said first voltage abnormality detection means has actually detected said AC-power input voltage (Vin) to be abnormal, said first converter (4) is controlled so that the value of said AC input current becomes zero.

4. An uninterruptible power supply unit according to any of Claims 1-3, wherein said first converter controlling means (20) is adapted to control said first converter (4) by using the voltage between said circuit node and said second input terminal (Pin2) as detected voltage of a voltage control loop for improving precision in the operation for controlling said first converter (4);
wherein said controlling means (20) further comprises a second voltage abnormality detection means (62) for detecting abnormalities in said voltage between said circuit node and said second input terminal (Pin2); wherein, when any abnormality has been detected by said second abnormality detection means, a predetermined rated voltage is used as said detected voltage.

5. An uninterruptible power supply unit according to Claim 4, wherein said rated voltage is set at a specific value that enables said voltage between said circuit node and said second input terminal (Pin2) at the moment of the generation of an abnormality in that voltage to attain a certain value within a range of compensating voltages allowable for said second converter (6).

6. An uninterruptible power supply unit according to Claim 4 or 5, wherein said predetermined rated voltage corresponds to zero voltage (0 V).

## Patentansprüche

1. Unterbrechungsfreie Stromversorgungseinheit, umfassend:
einen ersten und einen zweiten Eingangsanschluss (Pin1, Pin2) für die Aufnahme einer Eingangswechselspannung (Vin);
einen ersten und einen zweiten Ausgangsanschluss (Pout1, Pout2) zum Ausgeben einer Ausgangswechselspannung;
einen Stromversorgungsschalter (10), der in einer Stromversorgungsleitung zwischen dem ersten Eingangsanschluss (Pin1) und einem Schaltungsknoten angeordnet ist;
einen ersten Umrichter (4), der zwischen den Schaltungsknoten und den zweiten Eingangsanschluss (Pin2) geschaltet ist;
eine mit dem ersten Umrichter (4) verbundene Speicheranordnung (3) für elektrische Energie;
einen zweiten Umrichter (6), der zwischen den Schaltungsknoten und den ersten Ausgangsanschluss geschaltet und zum Einstellen der Ausgangswechselspannung an den Ausgangsanschlüssen (Pout1, Pout2) unter Verwendung der Speicheranordnung (3) für elektrische Energie als Energiequelle so gesteuert ist, dass die Ausgangswechselspannung einen vorbestimmten Wert annimmt;
eine erste Spannungsabnormitätserfassungsanordnung zum Erfassen von Abnormitäten bei der an den Eingangsanschlüssen eingegebenen Eingangswechselspannung; und
eine Steueranordnung (20) beschaffen zum Steuern des Stromversorgungsschalters (10) nach Maßgabe des durch die erste Spannungsabnormitätserfassungsanordnung erfassten Ergebnisses;
wobei die Steueranordnung (20) eine Schaltersteuereinheit (26) beschaffen zum Steuern des Stromversorgungsschalters (10) derart, dass er elektrisch leitend ist, während keine Abnormität durch die erste Spannungsabnormitätserfassungsanordnung erfasst wird, und ausschaltet, wenn eine Abnormität erfasst worden ist, aufweist;
**dadurch gekennzeichnet, dass** die Steueranordnung (20) eine Steuereinheit (22) für den ersten Umrichter aufweist, die so ausgelegt ist, dass sie den ersten Umrichter (4) derart steuert, dass die in der Speicheranordnung (3) für elektrische Energie gespeicherte Energie einen vorbestimmten Nennwert annimmt, während keine Abnormität von der ersten Spannungsabnormitätserfassungsanordnung erfasst wird, und, wenn eine Abnormität erfasst worden ist, dass sie den ersten Umrichter (4), gleichzeitig mit der Steuerung des Stromversorgungsschalters (10) auszuschalten, derart steuert, dass der Wert des durch den ersten Umrichter (4) fließenden Stroms mit dem Wert des Ausgangswechselstroms durch die Ausgangsanschlüsse (Pout1, Pout2) vor dem Eintritt des Stromversorgungsschalters (10) in einen ausgeschalteten Zustand übereinstimmt.

2. Unterbrechungsfreie Stromversorgungseinheit, umfassend:
einen ersten und einen zweiten Eingangsanschluss (Pin1, Pin2) für die Aufnahme einer Eingangswechselspannung (Vin);
einen ersten und einen zweiten Ausgangsanschluss (Pout1, Pout2) zum Ausgeben einer Ausgangswechselspannung;
einen Stromversorgungsschalter (10), der in einer Stromversorgungsleitung zwischen dem ersten Eingangsanschluss (Pin1) und einem Schaltungsknoten angeordnet ist;
einen ersten Umrichter (4), der zwischen den Schaltungsknoten und den zweiten Eingangsanschluss (Pin2) geschaltet ist;
eine mit dem ersten Umrichter (4) verbundene Speicheranordnung (3) für elektrische Energie;
eine Eingangsdrossel (11), die zwischen dem Eingangsanschluss der Stromversorgungsleitung und dem ersten Umrichter (4) angeordnet ist;
einen zweiten Umrichter (6), der zwischen den Schaltungsknoten und den ersten Ausgangsanschluss geschaltet und zum Einstellen der Ausgangswechselspannung an den Ausgangsanschlüssen (Pout1, Pout2) unter Verwendung der Speicheranordnung (3) für elektrische Energie als Energiequelle so gesteuert ist, dass die Ausgangswechselspannung einen vorbestimmten Wert annimmt;
eine erste Spannungsabnormitätserfassungsanordnung zum Erfassen von Abnormitäten bei der an den Eingangsanschlüssen eingegebenen Eingangswechselspannung; und
eine Steueranordnung (20) beschaffen zum Steuern des Stromversorgungsschalters (10) nach Maßgabe des durch die erste Spannungsabnormitätserfassungsanordnung erfassten Ergebnisses;
wobei die Steueranordnung (20) eine Schaltersteuereinheit (26) beschaffen zum Steuern des Stromversorgungsschalters (10) derart, dass er elektrisch leitend ist, während keine Abnormität durch die erste Spannungsabnormitätserfassungsanordnung erfasst wird, und ausschaltet, wenn eine Abnormität erfasst worden ist, aufweist;
**dadurch gekennzeichnet, dass** die Steueranordnung (20) eine Steuereinheit (22) für den ersten Umrichter aufweist, die so ausgelegt ist, dass sie den ersten Umrichter (4) derart steuert, dass die in der Speicheranordnung (3) für elektrische Energie gespeicherte Energie einen vorbestimmten Nennwert annimmt, während keine Abnormität von der ersten Spannungsabnormitätserfassungsanordnung erfasst wird, und, wenn eine Abnormität erfasst worden ist, dass sie den ersten Umrichter (4), gleichzeitig mit der Steuerung des Stromversorgungsschalters (10) auszuschalten, derart steuert, dass der Wert des Eingangwechselstroms an dem Eingangsanschluss unter einen vorbestimmten zulässigen Wert fällt, bevor der Stromversorgungsschalter (10) in einen ausgeschalteten Zustand eingetreten ist.

3. Unterbrechungsfreie Stromversorgungseinheit nach Anspruch 2, bei der, wenn die erste Spannungsabnormitätserfassungsanordnung tatsächlich erfasst hat, dass die Eingangswechselspannung (Vin) abnormal ist, der erste Umrichter (4) so gesteuert ist, dass der Wert des Eingangwechselstroms Null wird.

4. Unterbrechungsfreie Stromversorgungseinheit nach einem Ansprüche 1-3, bei der die erste Umrichtersteueranordnung (20) ausgelegt ist, um den ersten Umrichter (4) durch Verwendung der Spannung zwischen dem Schaltungsknoten und dem zweiten Eingangsanschluss (Pin2) als erfasste Spannung eines Spannungsregelkreises zum Verbessern der Präzision des Betriebs zum Steuern des ersten Umrichters (4) zu steuern;
wobei die Steueranordnung (20) des Weiteren eine zweite Spannungsabnormitätserfassungsanordnung (62) zum Erfassen von Abnormitäten in der Spannung zwischen dem Spannungsknoten und dem zweiten Eingangsanschluss (Pin2) umfasst; wobei, wenn irgendeine Abnormität durch die zweite Abnormitätserfassungsanordnung erfasst worden ist, eine vorbestimmte Nennspannung als die erfasste Spannung verwendet wird.

5. Unterbrechungsfreie Stromversorgungseinheit nach Anspruch 4, bei der die Nennspannung auf einen definierten Wert eingestellt wird, der es ermöglicht, dass die Spannung zwischen dem Schaltungsknoten und dem zweiten Eingangsanschluss (Pin2) im Moment der Erzeugung einer Abnormität in jener Spannung einen bestimmten Wert innerhalb eines Bereichs von Kompensationsspannungen, die zulässig für den zweiten Umrichter (6) sind, annimmt.

6. Unterbrechungsfreie Stromversorgungseinheit nach Anspruch 4 oder 5, bei der die vorbestimmte Nennspannung einer Nullspannung (0 V) entspricht.

## Revendications

1. Unité d'alimentation électrique ininterruptible, comprenant :
des première et deuxième bornes d'entrée (Pin1, Pin2) pour recevoir une tension d'entrée d'alimentation alternative (Vin) :
des première et deuxième bornes de sortie (Pout1, Pout2) pour délivrer une tension de sortie alternative ;
un commutateur d'alimentation électrique (10) qui est interposé sur une ligne d'alimentation électrique entre la première borne d'entrée (Pin1) et un noeud de circuit ;
un premier convertisseur (4) qui est connecté entre le noeud de circuit et la deuxième borne d'entrée (Pin2) ;
un moyen (3) de stockage d'énergie électrique connecté au premier convertisseur (4) ;
un deuxième convertisseur (6) qui est connecté entre le noeud de circuit et la première borne de sortie et est commandé de façon à régler la tension de sortie alternative sur les bornes de sortie (Pout1, Pout2) en utilisant le moyen (3) de stockage d'énergie électrique comme source d'énergie afin que la tension de sortie alternative atteigne une valeur déterminée à l'avance ;
un premier moyen de détection d'anomalie de tension apte à détecter des anomalies de la tension d'entrée d'alimentation alternative appliquée à les bornes d'entrée; et
un moyen (20) de commande apte à commander le commutateur (10) d'alimentation électrique en réponse au résultat détecté par le premier moyen de détection d'anomalie de tension ;
dans lequel le moyen (20) de commande comporte une unité (26) de commande de commutateur apte à commander le commutateur (10) d'alimentation électrique de façon à ce qu'il soit électriquement conducteur lorsque aucune anomalie n'est détectée par le premier moyen de détection d'anomalie de tension et à ce qu'il s'ouvre lorsqu'une anomalie a été détectée ;
**caractérisée en ce que** le moyen (20) de commande comporte une unité (22) de commande de premier convertisseur apte à commander le premier convertisseur (4) de façon à ce que l'énergie stockée dans le moyen (3) de stockage d'énergie électrique atteigne une valeur nominale déterminée à l'avance lorsque aucune anomalie n'est détectée par le premier moyen de détection d'anomalie de tension et, lorsqu'une anomalie a été détectée, à commander le premier convertisseur (4) en même temps que le commutateur (10) d'alimentation électrique est commandé de façon à s'ouvrir, afin que la valeur du courant passant à travers le premier convertisseur (4) coïncide avec la valeur du courant de sortie alternatif passant sur les bornes de sortie (Pout1, Pout2) avant que le commutateur (10) d'alimentation électrique ne soit passé à l'état ouvert.

2. Unité d'alimentation électrique ininterruptible comprenant :
des première et deuxième bornes d'entrée (Pin1, Pin2) pour recevoir une tension d'entrée d'alimentation alternative (Vin) ;
des première et deuxième bornes de sortie (Pout1, Pout2) pour délivrer une tension de sortie alternative ;
un commutateur d'alimentation électrique (10) qui est interposé sur une ligne d'alimentation électrique entre la première borne d'entrée (Pin1) et un noeud de circuit ;
un premier convertisseur (4) qui est connecté entre le noeud de circuit et la deuxième borne d'entrée (Pin2) ;
un moyen (3) de stockage d'énergie électrique connecté au premier convertisseur (4) ;
une réactance d'entrée (11) qui est disposée entre la borne d'entrée de la ligne d'alimentation électrique et le premier convertisseur (4) ;
un deuxième convertisseur (6) qui est connecté entre le noeud de circuit et la première borne de sortie et est commandé de façon à régler la tension de sortie alternative sur les bornes de sortie (Pout1, Pout2) en utilisant le moyen (3) de stockage d'énergie électrique comme source d'énergie afin que la tension de sortie alternative atteigne une valeur déterminée à l'avance ;
un premier moyen de détection d'anomalie de tension apte à détecter des anomalies de la tension d'entrée d'alimentation alternative appliquée à les bornes d'entrée; et
un moyen (20) de commande apte à commander le commutateur (10) d'alimentation électrique en réponse au résultat détecté par le premier moyen de détection d.'anomalie de tension;
dans laquelle le moyen (20) de commande comporte une unité (26) de commande de commutateur apte à commander le commutateur (10) d'alimentation électrique de façon à ce qu'il soit électriquement conducteur lorsque aucune anomalie n'est détectée par le premier moyen de détection d'anomalie de tension et à ce qu'il s'ouvre lorsqu'une anomalie a été détectée ;
**caractérisée en ce que** le moyen (20) de commande comporte une unité (22) de commande de premier convertisseur apte à commander le premier convertisseur (4) de façon à ce que l'énergie stockée dans le moyen (3) de stockage d'énergie électrique atteigne une valeur nominale déterminée à l'avance lorsque aucune anomalie n'est détectée par le premier moyen de détection d'anomalie de tension et, lorsqu'une anomalie a été détectée, à commander le premier convertisseur (4) en même temps que le commutateur (10) d'alimentation électrique est commandé de façon à s'ouvrir, afin que la valeur du courant d'entrée alternatif sur la borne d'entrée s'abaisse en dessous d'une valeur admissible déterminée à l'avance avant que le commutateur (10) d'alimentation électrique ne soit passé à l'état ouvert.

3. Unité d'alimentation électrique ininterruptible suivant la revendication 2, dans laquelle, lorsque le premier moyen de détection d'anomalie de tension a effectivement détecté que la tension d'entrée d'alimentation alternative (Vin) était anormale, le premier convertisseur (4) est commandé de façon à ce que la valeur du courant d'entrée alternatif devienne nulle.

4. Unité d'alimentation électrique ininterruptible suivant l'une quelconque des revendications 1-3, dans laquelle le moyen (20) de commande de premier convertisseur est apte à commander le premier convertisseur (4) en utilisant la tension entre le noeud de circuit et la deuxième borne d'entrée (Pin2) en tant que tension détectée d'une boucle de commande de tension afin d'améliorer la précision de l'opération de commande du premier convertisseur (4) ;
dans laquelle le moyen (20) de commande comprend en outre un deuxième moyen (62) de détection d'anomalie de tension pour détecter des anomalies de la tension entre le noeud de circuit et la deuxième borne d'entrée (Pin2) ; dans laquelle, lorsqu'une anomalie quelconque a été détectée par le deuxième moyen de détection d'anomalie, une tension nominale déterminée à l'avance est utilisée en tant que tension détectée.

5. Unité d'alimentation électrique ininterruptible suivant la revendication 4, dans laquelle la tension nominale est réglée à une valeur spécifique qui permet à la tension entre le noeud de circuit et la deuxième borne d'entrée (Pin2) au moment de l'apparition d'une anomalie de cette tension, d'atteindre une certaine valeur se situant dans une gamme de tensions de compensation admissibles pour le deuxième convertisseur (6).

6. Unité d'alimentation électrique ininterruptible suivant la revendication 4 ou 5, dans laquelle la tension nominale déterminée à l'avance correspond à une tension nulle (0 V).
